(19) Europäisches Patentamt
European Patent Office
Office européen des brevets

(11) **EP 2 800 319 B1**

(12) **FASCICULE DE BREVET EUROPEEN**

(45) Date de publication et mention
de la délivrance du brevet:
**24.10.2018 Bulletin 2018/43**

(51) Int Cl.:
***H04L 12/70*** *(2013.01)*

(21) Numéro de dépôt: **14166436.7**

(22) Date de dépôt: **29.04.2014**

(54) **NOEUD, RÉSEAU MAILLÉ DE COMMUNICATION ET PROCÉDÉ DE RECONFIGURATION DU ROUTAGE**

KNOTEN, VERMASCHTES NETZ UND VERFAHREN ZUM KONFIGURIERUNG DER LEITWEGLENKUNG

NODE, MESH NETWORK AND METHOD FOR RECONFIGURING ROUTING.

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **02.05.2013 FR 1301023**

(43) Date de publication de la demande:
**05.11.2014 Bulletin 2014/45**

(73) Titulaire: **Thales**
**92200 Neuilly Sur Seine (FR)**

(72) Inventeurs:
• **Coustal, Pierre**
**33608 Pessac Cedex (FR)**
• **Tailliez, Franck**
**33608 Pessac Cedex (FR)**

(74) Mandataire: **Lavoix**
**2, place d'Estienne d'Orves**
**75441 Paris Cedex 09 (FR)**

(56) Documents cités:
**EP-A1- 2 337 284    US-A1- 2002 067 720**

EP 2 800 319 B1

**Description**

La présente invention est relative aux réseaux maillés de communication. Elle est plus particulièrement relative aux procédés et aux dispositifs pour la reconfiguration du routage, qui permet l'acheminement des messages au sein du réseau.

Un réseau maillé de communication, aussi dénommé réseau de communication point à point, est constitué d'une pluralité de noeuds reliés entre eux par des liens, uni ou bidirectionnels. Le réseau comporte N noeuds, ou N est un entier quelconque mais défini. Le réseau est par conséquent fini et fermé.

Dans un tel réseau, l'acheminement d'un message entre un noeud émetteur et un noeud destinataire utilise des noeuds intermédiaires pour relayer le message et s'appuie sur un mécanisme de routage.

De manière générale, quelle que soit la nature de la couche physique du réseau considéré, le problème de la robustesse de l'acheminement se pose dès lors que ce réseau est fondé sur un tel mécanisme de routage.

Afin de ne pas perdre tout ou partie du service de communication lors d'une panne d'un ou de plusieurs noeuds et/ou d'une rupture d'un ou de plusieurs liens, ou bien encore pour permettre la prise en compte d'un besoin fonctionnel correspondant à l'absence d'un ou plusieurs noeuds, la topologie du réseau doit nécessairement présenter un certain degré de connectivité.

La connectivité du réseau est une réponse structurelle au besoin de robustesse lors de la disparition d'un ou plusieurs noeuds ou liens.

Ainsi, pour obtenir un réseau robuste à la disparition de tout sous-ensemble constitué de p-1 noeuds quelconques, il est nécessaire et suffisant que le graphe correspondant au réseau soit un graphe p-connexe.

Un tel réseau continue alors à assurer le service de communication entre tous les noeuds restants pour n'importe quel groupe de p-1 noeuds absents.

Une condition nécessaire (mais pas suffisante) pour qu'un graphe soit p-connexe est que chacun de ses noeuds ait au moins p noeuds voisins, c'est-à-dire qu'il soit relié par des liens bidirectionnels à p autres noeuds du réseau.

La complexité du réseau augmente avec le nombre total N de noeuds et le degré de connectivité du réseau, c'est-à-dire le nombre de liens entre les noeuds.

Dans un réseau complexe, la question du routage s'avère un problème difficile à traiter, dès lors qu'il est nécessaire de prendre en compte des modifications aléatoires du réseau, telles que la disparition d'un ou plusieurs noeuds ou liens.

En effet, si la fonction de routage n'est pas correctement pensée, elle peut conduire à la perte totale ou partielle du service de communication entre les noeuds restants après une modification du réseau, alors même que les noeuds restants conservent une connectivité structurelle totale entre eux, de nature à permettre le maintien du service de communication.

Par le document US2002/067720 on connait un procédé de routage fondé sur une information de distance résultant de la pondération des liens d'un réseau statique, permettant d'éviter la formation de boucles dans les chemins de routage.

Dans ce contexte, l'invention a pour but de pallier ces problèmes.

A cette fin, l'invention a pour objet un noeud, un réseau composé de tels noeuds et un procédé de reconfiguration du routage dans un tel réseau selon les revendications.

Le module de routage d'un noeud constitue un dispositif élémentaire et générique permettant, lorsqu'il est intégré à un noeud, de construire un réseau maillé de communication quelconque qui présente la caractéristique de garantir, en toutes circonstances, un routage exploitant 100 % de la connectivité potentielle du réseau, et utilisant toujours le chemin de routage minimal.

L'expression «100% de la connectivité potentielle du réseau» signifie que le routage entre deux noeuds est assuré dès qu'un chemin existe entre ces deux noeuds. L'expression « chemin minimal » signifie que le chemin emprunté par le message entre un noeud émetteur et un noeud destinataire passe par le minimum de noeuds intermédiaires.

Un tel module de routage peut résulter de la programmation adaptée d'un circuit logique programmable

L'invention et ses avantages seront mieux compris à la lecture de la description qui va suivre, donnée uniquement à titre d'illustration, d'un exemple de réalisation particulier. Celui-ci porte sur la réalisation d'un réseau maillé de communication 3-connexe.

La description détaillée est faite en se référant aux dessins annexés sur lesquels :

- la figure 1 est un graphe correspondant à un réseau maillé de communication 3-connexe, dans lequel chaque noeud est connecté par trois liens à trois autres noeuds, dits noeuds voisins ;

- la figure 2 est une représentation schématique, sous forme de blocs fonctionnels, d'un noeud du réseau de la figure 1, ce noeud intégrant un module de routage ;

- la figure 3 est une représentation d'un circuit logique constituant une première mise en oeuvre possible d'un moyen de calcul d'un vecteur de routage dont est muni le module de routage du noeud de la figure 2 ; et,

- la figure 4 est une représentation d'un circuit logique constituant une seconde mise en oeuvre possible d'un moyen de calcul d'un vecteur de routage.

## Structure du réseau

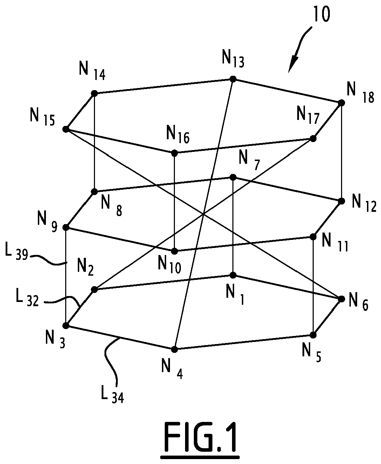

La figure 1 représente, sous la forme d'un graphe, un réseau maillé de communication 10 composé de dix-huit noeuds et vingt-sept liens bidirectionnels. Le réseau 10 est fini et fermé.

Chaque noeud est identifié par la lettre N suivie d'un entier i correspondant à un numéro logique d'identification absolu du noeud sur le réseau 10.

Chaque lien est identifié par la lettre L suivie des numéros logiques des deux noeuds connectés l'un à l'autre par ce lien. Ainsi le lien Lij connecte les noeuds $N_i$ et $N_j$. Sur la figure 1, seuls les liens issus du noeud $N_3$ ont été repérés pour des raisons de clarté.

Chaque noeud $N_i$ est connecté à trois noeuds voisins $N_k$, $N_l$ et $N_m$, de sorte que le réseau 10 est 3-connexe.

La distance maximale entre deux noeuds $N_i$ et $N_j$ quelconques du réseau 10 est de quatre pas. La maille composée de six noeuds représente la distance du cycle le plus court qui peut être construit à l'intérieur du réseau 10.

Les noeuds sont propres à échanger entre eux des messages de communication, qui sont transmis sur les liens.

Dans le mode de réalisation particulier décrit ici en détail, le réseau 10 fait partie intégrante d'un système modulaire dans lequel chaque noeud $N_i$ constitue un point de connexion d'un module applicatif 20 dudit système modulaire.

Le réseau 10 est robuste à toute panne double de noeud(s) et/ou de lien(s) : tous les noeuds $N_i$ restent accessibles entre eux si on supprime deux liens (dans les deux sens), deux noeuds ou un noeud et un lien, quelconques dans le réseau 10. Ou encore, après modification du réseau 10, il existe au moins un chemin permettant l'échange de messages entre un noeud source et un noeud destination.

## Structure d'un noeud

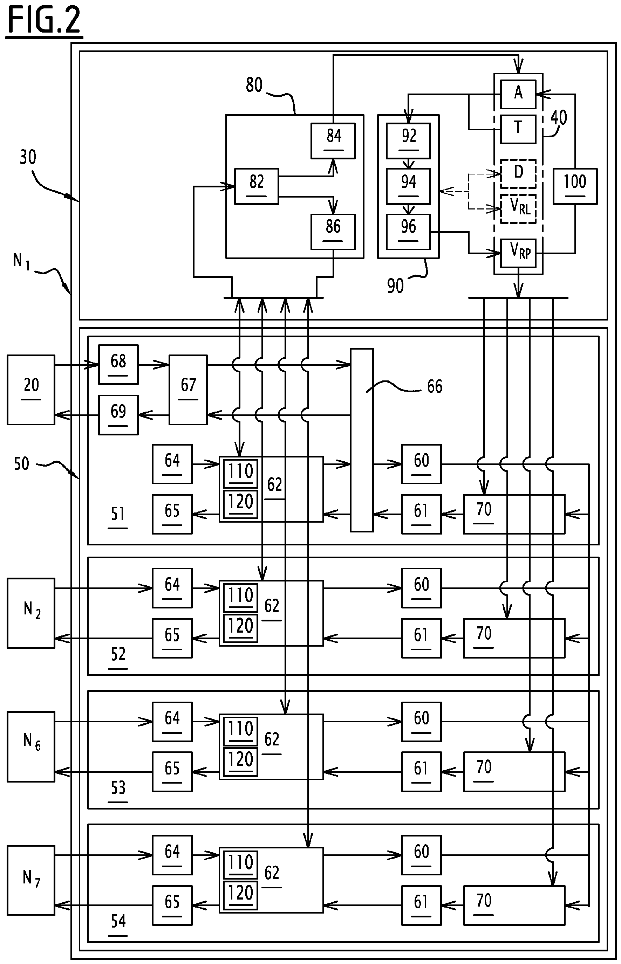

Comme représenté à la figure 2 pour le cas particulier du noeud $N_1$, chaque noeud $N_i$ du réseau 10 comporte un module d'entrée/sortie 50 et un module de routage 30.

Le module d'entrée/sortie 50 comporte quatre ports d'entrée /sortie, dont un port d'entrée/sortie 51, dit interne, est connecté à un module applicatif 20. Les autres ports 52 à 54, dits externes, sont connectés à d'autres noeuds du réseau 10, qui sont les noeuds voisins du noeud considéré lorsque les liens les connectant sont dans l'état actif.

Chacun des ports 51 à 54 comporte un commutateur 70, une mémoire tampon en entrée, telle qu'une FIFO d'entrée 60, une mémoire tampon en sortie, telle qu'une FIFO de sortie 61, un module de gestion de lien 62, un coupleur d'entrée 64, par exemple sérialisateur, et un coupleur de sortie 65, par exemple désérialisateur.

De préférence, le port interne 51 comporte un mécanisme de sélection 66 propre à coupler les FIFO d'entrée 60 et de sortie 61 soit aux coupleurs d'entrée 64 et de sortie 65, soit à des coupleurs hôte d'entrée 68 et de sortie 69, par l'intermédiaire d'un contrôleur 67.

Le port interne 51 est ainsi recyclable en passerelle. Pour l'échange de messages opérationnels avec le module applicatif 20, les coupleurs d'entrée 64 et de sortie 65 sont désactivés et les coupleurs hôte d'entrée 68 et de sortie 69 sont activés.

Configuré en passerelle, les coupleurs hôtes d'entrée 68 et de sortie 69 sont désactivés et les coupleurs d'entrée 64 et de sortie 65 sont activés. Cela permet de connecter le port 51 à un autre noeud, également configuré en passerelle, appartenant à un autre réseau. Des grandeurs de configuration relatives à chacun des deux réseaux ainsi reliés, et, en particulier, la matrice d'adjacence A, ne sont pas échangées par ces passerelles de sorte que chaque réseau voit l'autre comme un groupe de noeuds distant.

Chaque noeud $N_i$ réalise une fonction de commutation locale entre ses différents ports d'entrée/sortie afin d'organiser l'ordonnancement du trafic de messages et garantir le flux dans le réseau 10.

Cette fonction de commutation est réalisée par les quatre commutateurs 70 des ports 51 à 54.

Les commutateurs 70 sont indépendants entre eux.

Le commutateur 70 d'un port est accroché à la FIFO de sortie 61 de ce port. Le commutateur 70 d'un port est connecté à un bus commun sur lequel sont également connecté les quatre FIFO d'entrée 60 des différents ports du noeud.

Un message opérationnel comporte une portion d'en-tête indiquant le numéro logique du noeud destinataire du message.

Au sein d'un même noeud, un message opérationnel placé dans une FIFO d'entrée d'un port, dit d'entrée, est copié dans la FIFO de sortie d'un port, dit de sortie, qui est sélectionné en fonction du numéro logique du noeud destinataire et d'un vecteur de routage physique $V_{RP}$.

Le transfert d'un message opérationnel d'une FIFO d'entrée du port d'entrée, vers la FIFO de sortie du port de sortie est asservi au signal « FIFO ALMOST FULL » de la FIFO de sortie du port de sortie. Ce mécanisme de contrôle est réalisé par le commutateur 70 du port de sortie.

Un mécanisme de priorité tournante entre les ports est mis en oeuvre par les commutateurs 70. Chacun d'eux teste cycliquement les FIFO d'entrée des différents ports pour vérifier s'ils contiennent des messages opérationnels à destination du port de sortie de la FIFO de sortie duquel le commutateur 70 considéré a la charge.

Ainsi, chaque message opérationnel déposé en première place dans une FIFO d'entrée d'un port d'entrée attend la libération d'une place dans la FIFO de sortie d'un port de sortie pendant, au plus, un cycle élémentaire. Ce cycle est défini comme le temps de transfert d'un message opérationnel de taille maximale entre deux noeuds voisins.

Le module de gestion de lien 62 d'un port comporte un module de détection 110 et un module de service 120.

Le module de détection 110 est propre à déterminer, en temps réel, l'état du lien connecté sur les coupleurs d'entrée/sortie 64 et 65 ou sur les coupleurs hôtes d'entrée/sortie 68 et 69. Le module de détection 110 est propre à transmettre des informations de configuration dites internes relatives à l'état du lien, vers un module de gestion de la configuration 80 qui sera présenté ci-dessous.

Plus précisément, le module 110 d'un noeud aval $N_i$ détecte l'apparition ou la disparition d'un lien avec un noeud amont $N_j$ voisin du noeud $N_i$ en s'échangeant des informations matérielles. Pour l'établissement d'un lien, lorsque deux noeuds voisins se détectent comme passant de l'état non connectés à l'état connecté, c'est-à-dire du basculement du lien les connectant de l'état inactif à l'état actif, les modules 110 de deux noeuds s'échangent les numéros logiques de ces derniers. De manière similaire, lorsqu'un module 110 détecte la disparition du lien entrant, il passe dans l'état non connecté.

Le module 110 est propre à filtrer les changements d'état du lien, afin de rejeter les éventuels phénomènes parasites pouvant donner lieu à des détections intempestives. Le filtrage consiste notamment, lors du basculement du lien de l'état inactif à l'état actif, à observer le maintien du lien dans un état actif stable, pendant une durée prédéterminée.

Le module 110 est propre à transmettre les changements d'état du lien en tant qu'informations de configuration internes au module de configuration 80.

Une fois le lien correspondant actif, le module de gestion 62 de ce lien réalise le contrôle du flux des messages par un mécanisme débrayable selon le principe suivant : entre deux noeuds, le transfert d'un message d'un port de sortie d'un noeud amont Nj vers le port d'entrée d'un noeud aval Ni est asservi au signal « FIFO ALMOST FULL » de la FIFO d'entrée du port d'entrée du noeud aval Ni.

Le module de service 120 est propre à identifier, dans le flux de messages entrant, un message de service. Un message de service incident comporte des informations de configuration sur l'état des liens du réseau. Le module de service 120 est propre à extraire des informations de configuration d'un message de service et à les transmettre, en tant qu'informations de configuration externes, vers le module de configuration 80.

Le module 120 est également propre à insérer un message de service provenant du module de configuration 80 dans le flux de messages sortant, entre deux messages opérationnels.

Le module de routage 30 comporte un moyen de stockage 40 de grandeurs comportant des paramètres de configuration, des paramètres intermédiaires et un vecteur de routage physique.

Le module de routage 30 comporte un moyen de calcul 90 propre à calculer le vecteur de routage physique à partir des paramètres de configuration.

Le module de routage 30 comporte un moyen de nettoyage 100 propre à nettoyer les paramètres de configuration ayant servis au calcul du vecteur de routage.

Le module de routage 30 comporte un moyen de configuration 80 propre à mettre à jour les paramètres de configuration du noeud considéré et à transmettre des informations de configuration aux autres noeuds du réseau via le module 120.

Définition des grandeurs T, A. D. $V_{RL}$ et $V_{RP}$

Le moyen de stockage 40 comporte :

- une table des voisins T, qui indique le numéro logique $\underline{k}$, $\underline{l}$ ou $\underline{m}$ des noeuds voisins $N_k$, $N_l$ et $N_m$ voisins du noeud $N_i$ considéré, c'est-à-dire les noeuds du réseau qui sont reliés directement à un port du noeud $N_i$ ;
- une matrice d'adjacence A, qui indique la topologie courante du réseau 10 ;
- une matrice des distances D, qui indique la distance entre deux noeuds du réseau 10 ;
- un vecteur de routage logique $V_{RL}$, qui indique, pour chaque noeud destinataire d'un message émis par le noeud $N_i$ considéré, le numéro logique k, ! ou m du noeud voisin $N_k$, $N_l$ et $N_m$ à qui transmettre ce message ;
- un vecteur de routage physique $V_{RP}$, qui indique, pour chaque noeud destinataire d'un message émis par le noeud $N_i$ considéré, le port du noeud $N_i$ auquel est connecté le noeud $N_k$, $N_l$ et $N_m$ voisin à qui transmettre ce message.

La matrice d'adjacence A d'un réseau à N noeuds est une matrice de dimension N x N composée de 0 et de 1. Un élément non diagonal $A_{ij}$ dont la valeur est égale à 1 indique l'existence d'un lien entre les noeuds $N_i$ et $N_j$.

Par convention, dans la suite du document, le terme $A_{ij}=1$ désigne le lien orienté allant du noeud $N_j$ au noeud $N_i$ Pour un lien bidirectionnel, on a $A_{ij} = A_{ji} = 1$.

Ainsi, pour un réseau non orienté, c'est-à-dire dont tous les liens sont bidirectionnels, tel que le réseau 10, la matrice d'adjacence A associée est symétrique.

La matrice A associée à un réseau non orienté p-régulier de N noeuds est une matrice symétrique, constituée de 0 et de 1, et contenant N x p valeurs à 1.

La matrice d'adjacence A donne une description univoque de l'état du réseau. Elle donne une description complète du réseau tout en ne demandant que peu de mémoire de stockage.

La matrice d'adjacence A du réseau 10 est ainsi la suivante :

$$
\begin{pmatrix}
0 & 1 & 0 & 0 & 0 & 1 & 1 & 0 & 0 & 0 & 0 & 0 & 0 & 0 & 0 & 0 & 0 & 0 \\
1 & 0 & 1 & 0 & 0 & 0 & 0 & 0 & 0 & 0 & 0 & 0 & 0 & 0 & 0 & 0 & 1 & 0 \\
0 & 1 & 0 & 1 & 0 & 0 & 0 & 0 & 1 & 0 & 0 & 0 & 0 & 0 & 0 & 0 & 0 & 0 \\
0 & 0 & 1 & 0 & 1 & 0 & 0 & 0 & 0 & 0 & 0 & 0 & 1 & 0 & 0 & 0 & 0 & 0 \\
0 & 0 & 0 & 1 & 0 & 1 & 0 & 0 & 0 & 0 & 1 & 0 & 0 & 0 & 0 & 0 & 0 & 0 \\
1 & 0 & 0 & 0 & 1 & 0 & 0 & 0 & 0 & 0 & 0 & 0 & 0 & 0 & 1 & 0 & 0 & 0 \\
1 & 0 & 0 & 0 & 0 & 0 & 0 & 1 & 0 & 0 & 0 & 1 & 0 & 0 & 0 & 0 & 0 & 0 \\
0 & 0 & 0 & 0 & 0 & 0 & 1 & 0 & 1 & 0 & 0 & 0 & 0 & 1 & 0 & 0 & 0 & 0 \\
0 & 0 & 1 & 0 & 0 & 0 & 0 & 1 & 0 & 1 & 0 & 0 & 0 & 0 & 0 & 0 & 0 & 0 \\
0 & 0 & 0 & 0 & 0 & 0 & 0 & 0 & 1 & 0 & 1 & 0 & 0 & 0 & 0 & 1 & 0 & 0 \\
0 & 0 & 0 & 0 & 1 & 0 & 0 & 0 & 0 & 1 & 0 & 1 & 0 & 0 & 0 & 0 & 0 & 0 \\
0 & 0 & 0 & 0 & 0 & 0 & 1 & 0 & 0 & 0 & 1 & 0 & 0 & 0 & 0 & 0 & 0 & 1 \\
0 & 0 & 0 & 1 & 0 & 0 & 0 & 0 & 0 & 0 & 0 & 0 & 0 & 1 & 0 & 0 & 0 & 1 \\
0 & 0 & 0 & 0 & 0 & 0 & 0 & 1 & 0 & 0 & 0 & 0 & 1 & 0 & 1 & 0 & 0 & 0 \\
0 & 0 & 0 & 0 & 0 & 1 & 0 & 0 & 0 & 0 & 0 & 0 & 0 & 1 & 0 & 1 & 0 & 0 \\
0 & 0 & 0 & 0 & 0 & 0 & 0 & 0 & 0 & 1 & 0 & 0 & 0 & 0 & 1 & 0 & 1 & 0 \\
0 & 1 & 0 & 0 & 0 & 0 & 0 & 0 & 0 & 0 & 0 & 0 & 0 & 0 & 0 & 1 & 0 & 1 \\
0 & 0 & 0 & 0 & 0 & 0 & 0 & 0 & 0 & 0 & 0 & 1 & 1 & 0 & 0 & 0 & 1 & 0
\end{pmatrix}
$$

La matrice des distances D est une matrice symétrique N x N pour un réseau de N noeuds, dont chaque colonne (ou chaque ligne) est associée à un noeud. Ainsi, chaque colonne $D_i$ de la matrice D indique la distance, en nombre de pas, qui sépare le noeud considéré $N_i$ des autres noeuds $N_j$ du réseau 10.

La matrice des distances D est obtenue simplement à partir de la matrice A comme cela sera présenté ci-après.

La matrice D du réseau 10 est la suivante :

$$\begin{pmatrix}
0 & 1 & 2 & 3 & 2 & 1 & 1 & 2 & 3 & 4 & 3 & 2 & 4 & 3 & 2 & 3 & 2 & 3 \\
1 & 0 & 1 & 2 & 3 & 2 & 2 & 3 & 2 & 3 & 4 & 3 & 3 & 4 & 3 & 2 & 1 & 2 \\
2 & 1 & 0 & 1 & 2 & 3 & 3 & 2 & 1 & 2 & 3 & 4 & 2 & 3 & 4 & 3 & 2 & 3 \\
3 & 2 & 1 & 0 & 1 & 2 & 4 & 3 & 2 & 3 & 2 & 3 & 1 & 2 & 3 & 4 & 3 & 2 \\
2 & 3 & 2 & 1 & 0 & 1 & 3 & 4 & 3 & 2 & 1 & 2 & 2 & 3 & 2 & 3 & 4 & 3 \\
1 & 2 & 3 & 2 & 1 & 0 & 2 & 3 & 4 & 3 & 2 & 3 & 3 & 2 & 1 & 2 & 3 & 4 \\
1 & 2 & 3 & 4 & 3 & 2 & 0 & 1 & 2 & 3 & 2 & 1 & 3 & 2 & 3 & 4 & 3 & 2 \\
2 & 3 & 2 & 3 & 4 & 3 & 1 & 0 & 1 & 2 & 3 & 2 & 2 & 1 & 2 & 3 & 4 & 3 \\
3 & 2 & 1 & 2 & 3 & 4 & 2 & 1 & 0 & 1 & 2 & 3 & 3 & 2 & 3 & 2 & 3 & 4 \\
4 & 3 & 2 & 3 & 2 & 3 & 3 & 2 & 1 & 0 & 1 & 2 & 4 & 3 & 2 & 1 & 2 & 3 \\
3 & 4 & 3 & 2 & 1 & 2 & 2 & 3 & 2 & 1 & 0 & 1 & 3 & 4 & 3 & 2 & 3 & 2 \\
2 & 3 & 4 & 3 & 2 & 3 & 1 & 2 & 3 & 2 & 1 & 0 & 2 & 3 & 4 & 3 & 2 & 1 \\
4 & 3 & 2 & 1 & 2 & 3 & 3 & 2 & 3 & 4 & 3 & 2 & 0 & 1 & 2 & 3 & 2 & 1 \\
3 & 4 & 3 & 2 & 3 & 2 & 2 & 1 & 2 & 3 & 4 & 3 & 1 & 0 & 1 & 2 & 3 & 2 \\
2 & 3 & 4 & 3 & 2 & 1 & 3 & 2 & 3 & 2 & 3 & 4 & 2 & 1 & 0 & 1 & 2 & 3 \\
3 & 2 & 3 & 4 & 3 & 2 & 4 & 3 & 2 & 1 & 2 & 3 & 3 & 2 & 1 & 0 & 1 & 2 \\
2 & 1 & 2 & 3 & 4 & 3 & 3 & 4 & 3 & 2 & 3 & 2 & 2 & 3 & 2 & 1 & 0 & 1 \\
3 & 2 & 3 & 2 & 3 & 4 & 2 & 3 & 4 & 3 & 2 & 1 & 1 & 2 & 3 & 2 & 1 & 0
\end{pmatrix}$$

La matrice D indique que la distance maximale entre deux noeuds quelconques du réseau 10 est de quatre pas.

La détermination d'un chemin dans le réseau, c'est-à-dire de l'ensemble ordonné des noeuds à parcourir pour acheminer un message opérationnel d'un noeud source à un noeud destinataire, repose sur le principe de la programmation dynamique de BELLMAN selon lequel toute portion d'un chemin optimal est elle-même optimale. Ainsi, il suffit qu'un noeud source $N_i$ réémette un message vers le noeud voisin qui présente le chemin optimal vers le noeud destinataire du message. De proche en proche, le message suit, de fait, le chemin optimal.

D'un point de vue mathématique, la détermination du chemin optimal s'appuie sur l'utilisation de la matrice des distances D. La matrice des distances permet à un noeud $N_i$ qui doit réémettre un message opérationnel vers un noeud destinataire, de sélectionner, parmi ses voisins, celui qui présente le chemin optimal, c'est-à-dire la distance la plus faible avec le noeud destinataire.

Cette sélection n'est pas réalisée en temps réel, mais dans une étape de calcul d'un vecteur de routage, consécutive à une modification de la configuration du réseau 10.

Pour chacun des noeuds, le vecteur de routage logique $V_{RL}$ est une liste associant au numéro logique d'un noeud destinataire, le numéro logique du noeud voisin vers lequel le message doit être routé.

Sous une forme matricielle, agrégeant en colonne les vecteurs de routage logique de chacun des noeuds du réseau 10, on a ainsi :

$$\begin{pmatrix}
1 & 1 & 2 & 5 & 6 & 1 & 1 & 7 & 3 & 16 & 5 & 7 & 4 & 8 & 6 & 17 & 2 & 12 \\
2 & 2 & 2 & 3 & 6 & 1 & 1 & 9 & 3 & 16 & 5 & 18 & 4 & 8 & 6 & 17 & 2 & 17 \\
2 & 3 & 3 & 3 & 4 & 1 & 1 & 9 & 3 & 9 & 5 & 18 & 4 & 8 & 6 & 10 & 2 & 13 \\
2 & 3 & 4 & 4 & 4 & 5 & 1 & 14 & 3 & 11 & 5 & 18 & 4 & 13 & 6 & 10 & 2 & 13 \\
6 & 3 & 4 & 5 & 5 & 5 & 1 & 14 & 3 & 11 & 5 & 11 & 4 & 15 & 6 & 10 & 2 & 12 \\
6 & 1 & 4 & 5 & 6 & 6 & 1 & 14 & 3 & 16 & 5 & 7 & 4 & 15 & 6 & 15 & 2 & 12 \\
7 & 1 & 9 & 13 & 11 & 1 & 7 & 7 & 8 & 11 & 12 & 7 & 14 & 8 & 6 & 10 & 2 & 12 \\
7 & 3 & 9 & 13 & 11 & 15 & 8 & 8 & 8 & 9 & 12 & 7 & 14 & 8 & 14 & 10 & 1 & 12 \\
7 & 3 & 9 & 3 & 11 & 15 & 8 & 9 & 9 & 9 & 10 & 7 & 4 & 8 & 16 & 10 & 2 & 12 \\
7 & 17 & 9 & 5 & 11 & 15 & 8 & 9 & 10 & 10 & 10 & 11 & 4 & 8 & 16 & 10 & 16 & 12 \\
7 & 17 & 9 & 5 & 11 & 5 & 12 & 9 & 10 & 11 & 11 & 11 & 4 & 8 & 6 & 10 & 18 & 12 \\
7 & 17 & 9 & 13 & 11 & 1 & 12 & 7 & 10 & 11 & 12 & 12 & 18 & 8 & 6 & 10 & 18 & 12 \\
7 & 17 & 4 & 13 & 4 & 15 & 8 & 14 & 3 & 16 & 5 & 18 & 13 & 13 & 14 & 17 & 18 & 13 \\
7 & 17 & 9 & 13 & 6 & 15 & 8 & 14 & 8 & 16 & 5 & 18 & 14 & 14 & 14 & 15 & 18 & 13 \\
6 & 17 & 9 & 13 & 6 & 15 & 1 & 14 & 10 & 16 & 5 & 18 & 14 & 15 & 15 & 15 & 16 & 13 \\
2 & 17 & 9 & 13 & 11 & 15 & 1 & 14 & 10 & 16 & 10 & 18 & 14 & 15 & 16 & 16 & 16 & 17 \\
2 & 17 & 2 & 13 & 11 & 15 & 1 & 14 & 3 & 16 & 12 & 18 & 18 & 15 & 16 & 17 & 17 & 17 \\
7 & 17 & 4 & 13 & 11 & 15 & 12 & 14 & 3 & 16 & 12 & 18 & 18 & 13 & 16 & 17 & 18 & 18
\end{pmatrix}$$

Le fait de définir, pour chacun des noeuds du réseau, un vecteur $V_{RL}$ garantit le routage par un chemin à la fois minimal en distance et déterministe, pour tout couple noeud source / noeud destinataire.

Le vecteur de routage physique, utilisé par le commutateur 70 des différents ports du moyen d'entrée/sortie 50 d'un noeud $N_i$, est obtenu en remplaçant, dans le vecteur de routage logique $V_{RL}$, le numéro logique du noeud voisin $N_j$ par le numéro du port auquel est connecté le noeud voisin $N_j$.

Sous une forme matricielle, agrégeant en colonne les vecteurs de routage physique de chacun des noeuds du réseau 10, on a ainsi :

$$\begin{pmatrix}
1 & 3 & 3 & 2 & 2 & 2 & 4 & 3 & 4 & 4 & 4 & 2 & 4 & 4 & 4 & 2 & 4 & 4 \\
2 & 1 & 3 & 3 & 2 & 2 & 4 & 1 & 4 & 4 & 4 & 4 & 4 & 4 & 4 & 2 & 4 & 3 \\
2 & 2 & 1 & 3 & 3 & 2 & 4 & 2 & 4 & 3 & 4 & 4 & 4 & 4 & 4 & 4 & 4 & 2 \\
2 & 2 & 2 & 1 & 3 & 3 & 4 & 4 & 4 & 2 & 4 & 4 & 4 & 3 & 4 & 4 & 4 & 2 \\
3 & 2 & 2 & 2 & 1 & 3 & 4 & 4 & 4 & 2 & 4 & 3 & 4 & 2 & 4 & 4 & 4 & 4 \\
3 & 3 & 2 & 2 & 2 & 1 & 4 & 4 & 4 & 4 & 4 & 2 & 4 & 2 & 4 & 3 & 4 & 4 \\
4 & 3 & 4 & 4 & 4 & 2 & 1 & 3 & 3 & 2 & 2 & 2 & 2 & 4 & 4 & 4 & 4 & 4 \\
4 & 2 & 4 & 4 & 4 & 4 & 2 & 1 & 3 & 3 & 2 & 2 & 2 & 4 & 3 & 4 & 4 & 4 \\
4 & 2 & 4 & 3 & 4 & 4 & 2 & 2 & 1 & 3 & 3 & 2 & 4 & 4 & 2 & 4 & 4 & 4 \\
4 & 4 & 4 & 2 & 4 & 4 & 2 & 2 & 2 & 1 & 3 & 3 & 4 & 4 & 2 & 4 & 3 & 4 \\
4 & 4 & 4 & 2 & 4 & 3 & 3 & 2 & 2 & 2 & 1 & 3 & 4 & 4 & 4 & 4 & 2 & 4 \\
4 & 4 & 4 & 4 & 4 & 2 & 3 & 3 & 2 & 2 & 2 & 1 & 3 & 4 & 4 & 4 & 2 & 4 \\
4 & 4 & 2 & 4 & 3 & 4 & 2 & 4 & 4 & 4 & 4 & 4 & 1 & 3 & 3 & 2 & 2 & 2 \\
4 & 4 & 4 & 4 & 2 & 4 & 2 & 4 & 3 & 4 & 4 & 4 & 2 & 1 & 3 & 3 & 2 & 2 \\
3 & 4 & 4 & 4 & 2 & 4 & 4 & 4 & 2 & 4 & 4 & 4 & 2 & 2 & 1 & 3 & 3 & 2 \\
2 & 4 & 4 & 4 & 4 & 4 & 4 & 4 & 2 & 4 & 3 & 4 & 2 & 2 & 2 & 1 & 3 & 3 \\
2 & 4 & 3 & 4 & 4 & 4 & 4 & 4 & 4 & 4 & 2 & 4 & 3 & 2 & 2 & 2 & 1 & 3 \\
4 & 4 & 2 & 4 & 4 & 4 & 3 & 4 & 4 & 4 & 2 & 4 & 3 & 3 & 2 & 2 & 2 & 1
\end{pmatrix}$$

Moyen de calcul du vecteur de routage 90

Le module 90 comporte :

- Un sous-module 92 de calcul des colonnes de la matrice des distances D qui correspondent aux numéros logiques des voisins T, à partir de la matrice d'adjacence A ;
- Un sous-module 94 de détermination d'un vecteur de routage logique $V_{RL}$ à partir des colonnes de la matrice des distances D obtenues en sortie du sous-module 92 ; et,
- Un sous-module 96 de détermination d'un vecteur de routage physique $V_{RP}$ à partir du vecteur de routage logique $V_{RL}$ obtenu en sortie du sous-module 94

Le module 90 est propre à être exécuté à la suite d'une mise à jour de la matrice A comme cela sera décrit ultérieurement.

L'exécution du module 90 débute par l'exécution du sous-module 92 de calcul de la matrice des distances D à partir de la matrice A.

Le sous-module 92 est propre à mettre en oeuvre un algorithme du type dans lequel la matrice A est considérée comme une matrice de transition d'état.

Dans un tel algorithme, on suppose un graphe de N noeuds et on initialise une matrice diagonale $Y_0$=Id, dont tous les termes diagonaux sont égaux à 1. Les termes à 1 de la diagonale représentent des jetons dans les noeuds du réseau dans la situation initiale.

On suppose ensuite qu'à chaque itération indexée par l'entier i, les jetons se déplacent dans le réseau en fonction des liens décrits par la matrice d'adjacence A.

A chaque itération i, $AY_i$ donne le nombre et la position des jetons à partir de la situation $Y_i$. Afin de mémoriser les noeuds atteints aux pas précédents, on rajoute $Y_i$ au résultat $AY_i$. Ainsi : $Y_{i+1}=(A+Id)Y_i=(A+Id)^kY_0$

Le terme $D_{ij}$ de la matrice D, est alors égal au pas k à partir duquel, alors que le terme $(Y_{k-1})_{ij}$ est nul, le terme $(Yk)_{ij}$ devient non nul.

Sachant que dans un réseau de N noeuds, il ne peut pas y avoir de chemin simple, c'est-à-dire sans cycle, supérieur à N-1 pas, on peut interrompre l'algorithme lorsque i est égal à N-1.

Les termes $D_{ij}$ hors de la diagonale principale, c'est-à-dire tels que i est différent de i, qui sont nuls à la fin de

l 'algorithme signifient que le noeud $N_i$ n'est pas atteignable depuis le noeud $N_j$. Plus généralement, si on trouve des permutations sur les lignes et les colonnes de la matrice D qui font apparaître des blocs diagonaux non nuls indépendants, on a un graphe qui n'est pas connexe, c'est-à-dire qui correspond à un réseau comportant des sous-réseaux disjoints.

Le mode de réalisation suivant de l'algorithme du sous-module 92 donne une méthode simple et rapide pour calculer séquentiellement les seules colonnes i de la matrice D qui correspondent aux numéros logiques des voisins indiqués dans la table T. En effet, un noeud $N_i$ n'a besoin que de calculer les colonnes $D_j$ associées à ses voisins directs $N_j$ de manière à déterminer leurs distances à tous les autres noeuds du réseau.

```
1    for j=T(n)
2          for k=2 :N
3                Vj=D( :,j)
4                      for i=1 :N
5                            if Vj(i)==0
6                                  If max(Vj*A(i, :))>=1;
7                                        D(i,j)=k;
8                                  end
9                            end
10                      end
11          end

12          D(j,j)=0;
13   end
```

L'exécution du module 90 se poursuit par l'exécution du sous-module 94 dès que le sous-module 92 a calculé les colonnes de la matrice D désignées par T. Le sous-module 94 est propre à calculer le vecteur de routage logique $V_{RL}$.

Pour ce faire, le sous-module 94 est propre à construire, à partir des résultats obtenus en sortie du sous-module 92, un vecteur de routage logique $V_{RL}$ associant à chacun des numéros logiques des destinataires, le numéro logique du voisin direct présentant la distance la plus faible avec le destinataire en question..

L'exécution du module 90 se poursuit par l'exécution du sous-module 96 dès que le sous-module 94 a mis à jour le vecteur de routage logique $V_{RL}$. Le sous-module 96 est propre à calculer le vecteur de routage physique $V_{RP}$.

Pour ce faire, le sous-module 96 est propre à remplacer, dans le vecteur de routage logique $V_{RL}$ mis à jour, le numéro logique du noeud voisin par le numéro du port du noeud $N_i$ considéré qui est connecté à ce noeud voisin.

Le routage physique $V_{RP}$ ainsi mis à jour est mis à disposition des commutateurs 70.

Moyen de nettoyage 100 de la matrice A

La mise à jour du vecteur de routage physique $V_{RP}$ conduit à l'exécution du module 100 de nettoyage de la matrice d'adjacence A. Le module 100 permet de nettoyer la matrice A mise à jour pour éliminer toutes les informations relatives à des noeuds du réseau qui ne serait pas accessibles depuis le noeud $N_i$ considéré.

En effet, une fois le vecteur de routage physique $V_{RP}$ calculé, les valeurs à zéro de ce dernier indiquent que les noeuds correspondants ne sont pas atteignables depuis le noeud $N_i$ considéré.

Le nettoyage de la matrice d'adjacence A consiste alors à mettre à zéro toutes les lignes et les colonnes de la matrice A qui correspondent à ces noeuds non atteignables.

La justification de cette opération réside dans le fait que, par définition, les noeuds d'un premier sous-réseau ne peuvent pas être informés des modifications qui interviennent sur les noeuds d'un second sous-réseau qui serait disjoint du premier.

Le nettoyage permet donc de prévenir toute ambiguïté qui pourrait avoir lieu lorsque les deux sous-réseaux initialement disjoints se découvrent au moment de l'établissement d'un lien entre un noeud appartenant au premier sous-réseau et un noeud appartenant au second sous-réseau.

Le module 100 est par conséquent essentiel pour une bonne gestion de la configuration du réseau 10.

Moyen de gestion de la configuration 80

Comme représenté en détail à la figure 2, le moyen 80 de gestion de la configuration du réseau 10 comporte :

- Un sous-module 82 de filtrage des informations de configuration ;
- Un sous-module 84 de mise à jour de la matrice A et de la table T ;
- Un sous-module 86 de propagation des informations de configuration vers les autres noeuds du réseau 10.

Le module 110 d'un port émet des informations de configuration internes à destination du module 80 et, plus particulièrement, du sous-module 82 de filtrage.

Le module 120 d'un port émet des informations de configuration externes à destination du module 80 et, plus particulièrement, du sous-module 82 de filtrage.

Le sous-module 82 filtre les informations de configuration incidentes pour vérifier si elles ont déjà été prises en compte.

Dans l'affirmative, cela signifie que l'information de configuration a déjà été traitée. Il n'y a pas lieu de modifier la matrice A ni de propager l'information dans le réseau, ces actions ayant déjà été effectuées lors de la première réception de ces informations.

Dans la négative, les informations de configuration sont transmises au sous-module 84 de mise à jour de la matrice A et de la table T et au sous module sous-module 86 de propagation des informations de configuration.

Le sous-module 84 met alors à jour la liste des voisins T en retirant le numéro logique du noeud voisin maintenant non accessible ou en ajoutant le numéro logique du noeud voisin nouvellement accessible.

Le sous-module 84 met à jour la matrice d'adjacence A en fonction des informations de configuration qui lui sont transmises par le sous-module 82.

Si l'état du lien $L_{ij}$ est maintenant inactif, l'élément $A_{ij}=1$ de la matrice A est remplacé par l'élément $A_{ij}=0$. De manière similaire, si l'état du lien $L_{ij}$ est maintenant actif, l'élément $A_{ij}=0$ de la matrice A est remplacé par l'élément $A_{ij}=1$.

Le sous-module 86 de propagation des informations de configuration génère alors un message de service à destination des noeuds voisins pour partager avec ces derniers la configuration courante du réseau.

Un message de service indique la modification de l'état d'un lien entre deux noeuds quelconque du réseau.

Un message de service est transmis aux différents modules de gestion 62 des ports du noeud $N_i$ considéré, en vue de l'émission par le sous-module 120 de chaque module 62, de ce message de service.

Ce processus d'émission d'un message de service n'utilise pas les moyens de routage (commutateurs 70, FIFO d'entrée 60 et de sortie 61) utilisés pour les échanges de messages opérationnels. Des messages de service sont ainsi échangés au niveau de la couche physique du protocole de communication utilisé sur le réseau 10. Le mécanisme de configuration est donc indépendant des messages opérationnels échangés entre modules applicatifs 20.

Avec ce mécanisme, chaque noeud du réseau propage l'information de configuration vers ses voisins directs, de sorte que l'information concernant la modification de l'état d'un lien quelconque du réseau est propagée rapidement à l'ensemble du réseau 10. La propagation complète est réalisée en Dmax pas. Il y a diffusion (« broadcast » en anglais) de la topologie et/ou de ses variations à travers le réseau dans la phase de reconfiguration de celui-ci.

Le moyen de gestion de la configuration 80 de chaque noeud $N_i$ confère au réseau 10 la propriété d'auto-découverte, assurant aussi bien son initialisation que sa reconfiguration.

En effet, la gestion globale de la configuration du réseau 10 est assurée par la gestion locale de chacun des noeuds. Elle permet au réseau de s'adapter à la disparition ou l'apparition d'un ou plusieurs liens ou noeuds.

Cette propriété d'adaptation acquise, il suffit de considérer la perte successive de tous les noeuds puis leur réapparition dans un ordre aléatoire pour obtenir la propriété d'auto-découverte du réseau.

Consécutivement à chaque mise à jour de la matrice A, le module 90 de calcul du vecteur de routage est appelé pour la mise à jour du vecteur de routage physique $V_{RP}$.

Entre deux reconfigurations, le vecteur de routage n'est pas modifié. Il est statique. Ainsi le routage mis en oeuvre sur l'ensemble du réseau est un routage statique.

Circuit logique

La description précédente est une description fonctionnelle du module de routage. Différentes implémentations sont envisageables.

Par exemple, dans un mode de réalisation particulièrement avantageux, un circuit logique programmable, tel qu'un FPGA (selon l'acronyme anglais « field-programmable gate array »), est configuré pour mettre en oeuvre les différents moyens, modules et sous-modules présentés ci-dessus.

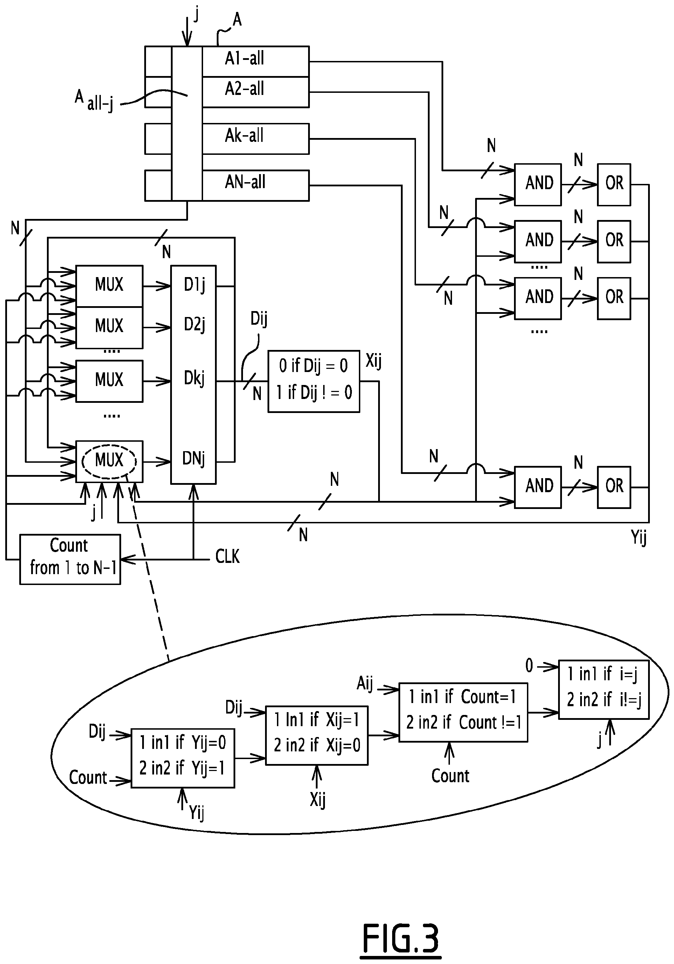

A la figure 3 est ainsi représenté un circuit logique du type séquentiel permettant de calculer le vecteur de routage physique $V_{RP}$ à partir de la matrice d'adjacence A.

Le circuit de la figure 3 réalise les lignes 2 à 12 de l'algorithme présenté ci-dessus en se limitant au calcul des colonnes $D_j$ de la matrice D correspondant aux seuls noeuds j voisins indiqués dans la table T.

Pour un noeud possédant p voisins, les lignes 1 et 13 de l'algorithme présenté ci-dessus sont réalisées par un cycle de p activations consécutives du circuit logique de la figure 3.

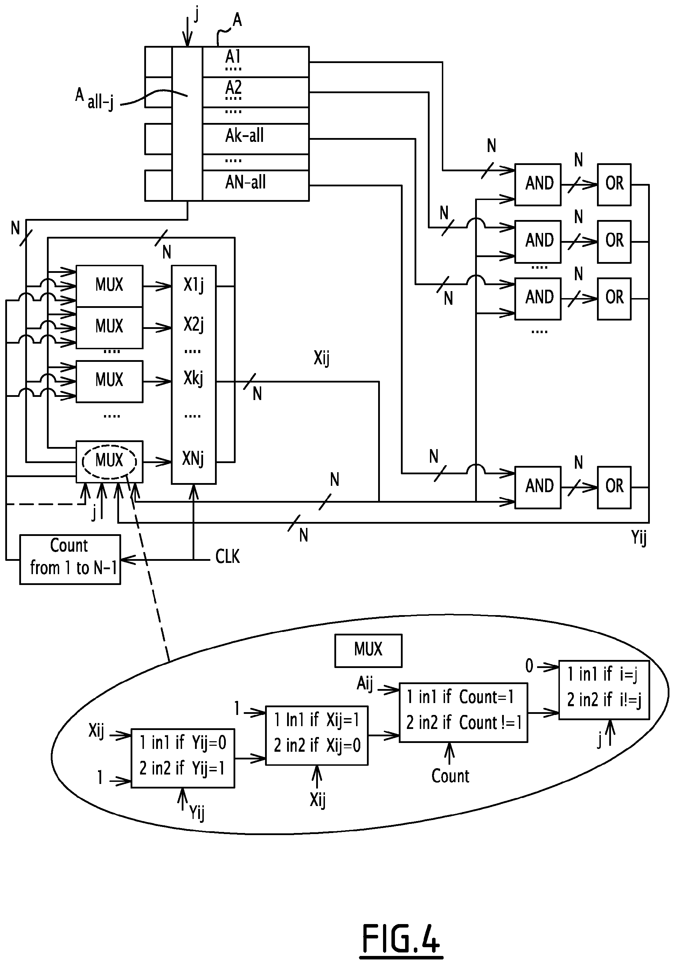

A la figure 4 est représenté un circuit logique du type parallèle permettant un calcul du vecteur de routage physique $V_{RP}$ à partir de la matrice d'adjacence A.

Un circuit logique du type parallèle présente l'avantage de conduire à l'obtention du vecteur de routage physique directement, c'est-à-dire sans avoir à passer par les paramètres de configuration intermédiaire. L'implémentation d'un tel circuit dans un FPGA s'en trouve simplifiée.

Ce circuit doit en revanche être implémenté p fois dans le FPGA, où p représente le nombre de ports externes du noeud et, par conséquent, le nombre maximum de noeuds voisins possibles.

En variante, tout circuit logique résultant d'une combinaison des circuits logiques du type séquentiel et du type parallèle précités est envisageable.

Il est à noter que pour des raisons de clarté de l'exposé, il a été indiqué que le module comporte les grandeurs T, A, D, $V_{RL}$ et $V_{RP}$. En fait, seul la matrice d'adjacence A et le vecteur de routage physique $V_{RP}$ sont strictement nécessaires. La matrice D et le vecteur $V_{RL}$ sont des intermédiaires de calcul. La liste T des voisins peut être facilement déduite de la matrice A et du numéro logique du noeud $N_i$ considéré.

D'autres implémentations sont envisageables, en particulier sous forme d'un programme d'ordinateur stocké dans la mémoire d'un calculateur et dont les instructions sont exécutables par une unité de calcul de ce calculateur. Une telle implémentation permet en particulier d'appliquer l'invention aux réseaux maillés qui comportent un grand nombre de noeuds. La matrice d'adjacente peut alors être augmentée d'une ligne et d'une colonne à chaque apparition d'un nouveau noeud sur le réseau, sans contrainte particulière, si ce n'est sur le temps de calcul du vecteur de routage lors d'une reconfiguration. Ceci est à opposer au cas d'une implémentation matérielle, dans laquelle le circuit logique est par exemple configuré pour gérer la configuration d'un réseau comportant un nombre maximum de noeuds, valant par exemple 64 noeuds.

Le réseau de la figure 1 est un exemple particulier.

Le procédé de reconfiguration et le module du routage permettant la mise en oeuvre de ce procédé, présentés ci-dessus, sont utilisables dans n'importe quel réseau maillé structurellement robuste, en particulier dans des réseaux où les noeuds n'ont pas un nombre identique de ports.

Un noeud peut comporter au moins un port d'entrée (noeud puits), ou au moins un port de sortie (noeud source), ou des ports d'entrée et/ou des ports de sortie, plusieurs ports internes, etc.

**Revendications**

1. Noeud $N_k$ d'un réseau maillé de communication (10) qui comporte N noeuds reliés par des liens, chaque noeud $N_k$ étant identifié sur ledit réseau par un numéro logique (k), ledit noeud $N_k$ comportant au moins un port d'entrée / sortie (52 à 54), dit port externe car connecté à un noeud du réseau, dit noeud voisin dudit noeud $N_k$, et un module de routage (30), **caractérisé en ce que** ledit module de routage comporte :

   - en tant que données indicatives d'une topologie courante dudit réseau, une matrice d'adjacence A dudit réseau, ladite matrice d'adjacence A étant une matrice de dimension N x N dont un élément non diagonal $A_{ij}$ est égal à 1 lorsqu'il existe un lien entre les noeuds $N_i$ et $N_j$ et 0 sinon, et une table $T_k$ indiquant les numéros logiques des noeuds du réseau voisins dudit noeud $N_k$;
   - un module de gestion de la configuration (80) adapté pour mettre à jour la matrice d'adjacence A et la table $T_k$ en fonction d'une information de configuration relative à un changement d'état d'un lien dudit réseau (10), reçue par ledit noeud dans un message de service,
   - un moyen de calcul (90), exécuté à chaque mise à jour de la matrice d'adjacence A et adapté pour calculer, à partir de ladite matrice d'adjacence A mise à jour et de ladite table $T_k$ mise à jour, un vecteur de routage physique ($V_{RP}$), ledit vecteur de routage physique étant statique entre deux reconfigurations du réseau, et indiquant, pour chaque noeud destinataire d'un message émis par ledit noeud $N_k$, le port d'entrée / sortie du noeud $N_k$ auquel est connecté le noeud voisin à qui transmettre ledit message.

2. Noeud selon la revendication 1, dans lequel ledit module de routage comporte un moyen de nettoyage (100) propre à nettoyer la matrice d'adjacence A, après que ledit moyen de calcul (90) a calculé un vecteur de routage physique ($V_{RP}$), ledit nettoyage consistant à mettre à zéro toutes les lignes et les colonnes de ladite matrice d'adjacence A qui correspondent aux noeuds non atteignables selon ledit vecteur de routage physique.

3. Noeud selon la revendication 1, dans lequel ledit module de routage comporte un moyen d'émission propre à générer, en fonction d'une information de configuration relative à un changement d'état d'un lien dudit réseau (10), un message de service destiné à être transmis audit port d'entrée / sortie (52 à 54) pour être propagé sur ledit réseau.

4. Noeud selon l'une quelconque des revendications 1 à 3, dans lequel ledit module de routage comporte un moyen de filtrage (82) propre à recevoir un message de service dudit port d'entrée / sortie (51 à 54) et à générer des informations de configuration.

5. Noeud selon l'une quelconque des revendications précédentes, dans lequel le moyen de calcul (90) du module de routage est du type séquentiel et utilise, en tant qu'intermédiaire de calcul, tout ou partie d'une matrice des distances (D).

6. Noeud selon l'une quelconque des revendications 1 à 4, dans lequel le moyen de calcul (90) du module de routage est du type parallèle.

7. Noeud selon la revendication 5 et la revendication 6, dans lequel le moyen de calcul (90) est une combinaison d'un moyen de calcul du type séquentiel et d'un moyen de calcul du type parallèle.

8. Noeud selon l'une quelconque des revendications 1 à 7, comportant un circuit logique programmable, qui est programmé pour constituer ledit module de routage.

9. Noeud selon l'une quelconque des revendications 1 à 8, comportant au moins un port d'entrée / sortie (51), dit port interne, destiné à être connecté à un module applicatif.

10. Noeud selon la revendication 9, comportant un moyen de sélection (66) pour transformer un port d'entrée / sortie en tant que port interne ou en tant que port externe.

11. Réseau maillé de communication (10) comportant une pluralité de noeuds ($N_i$) connectés par une pluralité de liens ($L_{ij}$), **caractérisé en ce qu'**au moins un noeud de ladite pluralité de noeuds est un noeud conforme à l'une quelconque des revendications 1 à 10.

12. Réseau selon la revendication 11, **caractérisé en ce que** le réseau est reconfigurable et le routage sur ledit réseau statique entre deux reconfigurations.

13. Procédé de reconfiguration d'un routage statique, destiné à être mis en oeuvre par les noeuds ($N_i$) d'un réseau maillé de communication (10) qui comporte N noeuds reliés par des liens, chaque noeud du réseau étant identifié sur ledit réseau par un numéro logique et comportant au moins un port d'entrée / sortie (52 à 54), dit port externe car connecté à un noeud du réseau, dit noeud voisin dudit noeud, **caractérisé en ce qu'**il comporte les étapes consistant à :

    - fournir, à chaque noeud $N_k$ du réseau, en tant que données indicatives d'une topologie courante dudit réseau, une matrice d'adjacence A dudit réseau, ladite matrice d'adjacence A étant une matrice de dimension N x N dont un élément non diagonal $A_{ij}$ est égal à 1 lorsqu'il existe un lien entre les noeuds $N_i$ et $N_j$ et 0 sinon, et une table $T_k$ indiquant les numéros logiques des noeuds du réseau voisins du noeud $N_k$;
    - mettre à jour, la matrice d'adjacence A et la table $T_k$ à chaque noeud $N_k$ en fonction d'une information de configuration relative à un changement d'état d'un lien dudit réseau (10), reçue par le noeud considéré dans un message de service,
    - calculer, à chaque mise à jour de la matrice d'adjacence A, un vecteur de routage physique ($V_{RP}$) à partir de la matrice d'adjacence A mise à jour et de la table $T_k$ mise à jour, ledit vecteur de routage physique ($V_{RP}$) indiquant pour chaque noeud destinataire d'un message émis par ledit noeud $N_k$, le port d'entrée/sortie du noeud $N_k$ auquel est connecté le noeud voisin à qui transmettre ledit message.

14. Procédé selon la revendication 13, comportant une étape de nettoyage consistant à nettoyer, pour chaque noeud du réseau $N_k$, la matrice d'adjacence A, après l'étape de calcul du vecteur de routage.

15. Procédé selon la revendication 13 ou la revendication 14, dans lequel le calcul du vecteur de routage utilise, en tant qu'intermédiaire de calcul, tout ou partie d'une matrice des distances (D).

**16.** Procédé selon la revendication 15, comportant les étapes suivantes :

- initialiser une matrice diagonale $Y_0$=Id, dont tous les termes diagonaux sont égaux à 1 ;
- à chaque itération indexée par l'entier k entre 1 et N-1, calculer : $Y_k=(A+Id)^k Y_0$, le terme $D_{ij}$ de la matrice D, est alors égal au pas k à partir duquel, alors que le terme $(Y_{k-1})_{ij}$ est nul, le terme $(Y_k)_{ij}$ devient non nul.

**Patentansprüche**

**1.** Knoten $N_k$ eines vermaschten Kommunikationsnetzwerks (10), das N Knoten umfasst, die durch Links verknüpft sind, wobei jeder Knoten $N_k$ auf dem besagten Netzwerk durch eine logische Nummer (k) identifiziert wird, wobei der besagte Knoten $N_k$ mindestens einen Eingangs-/Ausgangsanschluss (52 bis 54) umfasst, externer Anschluss genannt, da verbunden mit einem Knoten des Netzwerkes, Nachbarknoten des besagten Knotens $N_k$ genannt, und ein Routingmodul (30), **dadurch gekennzeichnet, dass** das besagte Routingmodul umfasst:

- als anzeigende Daten einer laufenden Topografie des besagten Netzwerkes eine Adjazenzmatrix A des besagten Netzwerkes, wobei die besagte Adjazenzmatrix A eine Matrix mit einer Abmessung N x N ist, wovon ein nicht diagonales Element $A_{ij}$ gleich 1 ist, wenn es einen Link zwischen den Knoten $N_i$ und $N_j$ gibt, und anderenfalls 0, und eine Tabelle $T_k$, die die logischen Nummern der Knoten des Netzwerkes, die Nachbarn des besagten Knotens $N_k$ sind, anzeigt,
- ein Modul zur Konfigurationsverwaltung (80), geeignet, um die Adjazenzmatrix A und die Tafel $T_k$ in Abhängigkeit von einer Konfigurationsinformation bezüglich eines Zustandswechsels eines Links des besagten Netzwerks (10) zu aktualisieren, die von dem besagten Knoten in einer Servicemeldung empfangen wird,
- ein Mittel zur Berechnung (90), ausgeführt bei jeder Aktualisierung der Adjazenzmatrix A und geeignet, anhand der besagten aktualisierten Adjazenzmatrix A und der besagten aktualisierten Tafel $T_k$ einen physischen Routingvektor ($V_{RP}$) zu berechnen, wobei der besagte physische Routingvektor zwischen zwei Neukonfigurierungen des Netzwerkes statisch ist, und für jeden Empfängerknoten einer von dem besagten Knoten $N_k$ gesendeten Nachricht den Eingangs-/Ausgangsanschluss des Knotens $N_k$ anzeigt, mit dem der Nachbarknoten, an den die besagte Meldung zu übermitteln ist, verbunden ist.

**2.** Knoten nach Anspruch 1, in welchem das besagte Routingmodul ein Mittel zur Reinigung (100) umfasst, dazu geeignet, die Adjazenzmatrix A zu reinigen, nachdem das besagte Mittel zur Berechnung (90) einen physischen Routingvektor ($V_{RP}$) berechnet hat, wobei die besagte Reinigung darin besteht, alle Reihen und Spalten der besagten Adjazenzmatrix A auf null zu setzen, die laut dem besagten physischen Routingvektor nicht erreichbaren Knoten entsprechen.

**3.** Knoten nach Anspruch 1, in welchem das besagte Routingmodul ein Modul zum Senden umfasst, dazu geeignet, in Abhängigkeit von einer Konfigurationsinformation bezüglich eines Zustandswechsels eines Links des besagten Netzwerks (10) eine Servicemeldung zu erzeugen, die dazu bestimmt ist, an den besagten Eingangs-/Ausgangsanschluss (52 bis 54) übermittelt zu werden, um auf dem besagten Netzwerk verbreitet zu werden.

**4.** Knoten nach einem der Ansprüche 1 bis 3, in welchem das besagte Routingmodul ein Mittel zum Filtern (82) umfasst, dazu geeignet, eine Servicemeldung von dem besagten Eingangs-/Ausgangsanschluss (51 bis 54) zu empfangen und Konfigurationsinformationen zu erzeugen.

**5.** Knoten nach einem der vorstehenden Ansprüche, in welchem das Mittel zur Berechnung (90) des Routingmoduls sequenzieller Art ist und als Berechnungsintermediator eine ganze oder einen Teil einer Distanzmatrix (D) verwendet.

**6.** Knoten nach einem der Ansprüche 1 bis 4, in welchem das Mittel zur Berechnung (90) des Routingmoduls paralleler Art ist.

**7.** Knoten nach Anspruch 5 und Anspruch 6, in welchem das Mittel zur Berechnung (90) eine Kombination aus einem Mittel zur Berechnung sequenzieller Art und einem Mittel zur Berechnung paralleler Art ist.

**8.** Knoten nach einem der Ansprüche 1 bis 7, der eine programmierbare logische Schaltung umfasst, die programmiert wird, um das besagte Routingmodul zu bilden.

**9.** Knoten nach einem der Ansprüche 1 bis 8, umfassend mindestens einen Eingangs-/Ausgangsanschluss (51), interner Anschluss genannt, dazu bestimmt, mit einem Applikationsmodul verbunden zu werden.

**10.** Knoten nach Anspruch 9, der ein Mittel zur Auswahl (66) umfasst, um ein Eingangs-/Ausgangsanschluss in einen internen Anschluss oder in einen externen Anschluss umzuwandeln.

**11.** Vermaschtes Kommunikationsnetzwerk (10), das eine Vielzahl von Knoten ($N_i$) umfasst, die durch eine Vielzahl von Links ($L_{ij}$) verbunden sind, **dadurch gekennzeichnet, dass** mindestens ein Knoten der besagten Vielzahl von Knoten ein Knoten entsprechend einem der Ansprüche 1 bis 10 ist.

**12.** Netzwerk nach Anspruch 11, **dadurch gekennzeichnet, dass** das Netzwerk neu konfigurierbar ist und das Routing auf dem besagten Netzwerk zwischen zwei Neukonfigurationen statisch ist.

**13.** Verfahren zur Neukonfiguration eines statischen Routings, dazu bestimmt, durch die Knoten ($N_i$) eines vermaschten Kommunikationsnetzwerkes (10), das N Knoten umfasst, die durch Links verknüpft sind, umgesetzt zu werden, wobei jeder Knoten des Netzwerkes auf dem besagten Netzwerk durch eine logische Nummer identifiziert wird und mindestens einen Eingangs-/Ausgangsanschluss (52 bis 54) umfasst, externer Anschluss genannt, da mit einem Knoten des Netzwerkes verbunden, Nachbarknoten des besagten Knotens genannt, **dadurch gekennzeichnet, dass** es die Schritte umfasst, bestehend in:

  - Lieferung, an jeden Knoten $N_k$ des Netzwerkes, als anzeigende Daten einer laufenden Topologie des besagten Netzwerkes, einer Adjazenzmatrix A des besagten Netzwerkes, wobei die besagte Adjazenzmatrix A eine Matrix mit einer Abmessung N x N ist, wovon ein nicht diagonales Element $A_{ij}$ gleich 1 ist, wenn es einen Link zwischen den Knoten $N_i$ und $N_j$ gibt, und anderenfalls 0, und eine Tafel $T_k$, die die logischen Nummern der Knoten des Netzwerkes, die Nachbarn des Knotens $N_k$ sind, anzeigt,
  - Aktualisierung der Adjazenzmatrix A und der Tafel $T_k$ mit jedem Knoten $N_k$ in Abhängigkeit von einer Konfigurationsinformation bezüglich einer Zustandsänderung eines Links des besagten Netzwerkes (10), die von dem betreffenden Knoten in einer Servicemeldung empfangen wird,
  - Berechnung, bei jeder Aktualisierung der Adjazenzmatrix A, eines physischen Routingvektors ($V_{RP}$) anhand der aktualisierten Adjazenzmatrix A und der aktualisierten Tafel $T_k$, wobei der besagte physische Routingvektor ($V_{RP}$) für jeden Empfängerknoten einer durch den besagten Knoten $N_k$ gesendeten Nachricht den Eingangs-/Ausgangsanschluss des Knotens $N_k$ anzeigt, mit dem der Nachbarknoten, an den die besagte Meldung zu übermitteln ist, verbunden ist.

**14.** Verfahren nach Anspruch 13, umfassend einen Schritt zur Reinigung, der darin besteht, für jenen Knoten des Netzwerkes $N_k$ die Adjazenzmatrix A zu reinigen, nach dem Schritt zur Berechnung des Routingvektors.

**15.** Verfahren nach Anspruch 13 oder Anspruch 14, in welchem die Berechnung des Routingvektors als Berechnungsintermediator eine ganze oder einen Teil einer Distanzmatrix (D) verwendet.

**16.** Verfahren nach Anspruch 15, umfassend die folgenden Schritte:

  - Initialisierung einer diagonalen Matrix $Y_0 = Id$, von der alle diagonalen Terme gleich 1 sind,
  - bei jeder durch das Ganze k zwischen 1 und N-1 indexierten Iteration, Berechnung: $Y_k = (A+Id)^k Y_0$, der Term $D_{ij}$ der Matrix D ist gleich dem Abstand k ausgehend von welchem, wenn der Term $(Y_{k-1})_{ij}$ null ist, der Term $(Y_k)_{ij}$ nicht null wird.

**Claims**

**1.** A node $N_k$ of a mesh communication network (10) that includes N nodes connected by links, each node $N_k$ being identified on said network by a logic number (k), said node $N_k$ including at least one input and/or output port (51 to 54), called external port because it is connected to a node of network, called neighboring node of node $N_k$, and a routing module (30), **characterized in that** said routing module includes:

  - as data indicative of a current topology of the network, an adjacency matrix A of said network, said adjacency matrix A being a matrix of size N x N, a non-diagonal element $A_{ij}$ of which is equal to 1 when a link exists between the nodes $N_i$ and $N_j$ and 0 otherwise, and a table $T_k$ indicating the logic numbers of the neighboring nodes of said node $N_k$;

- a configuration management module (80) adapted for updating the adjacency matrix A and the table $T_k$ as a function of a piece of configuration information relative to a state change of a link of said network (10) received by said node in a configuration message,
- a computation means (90), executed each time the adjacency matrix A is updated and adapted for computing, from said adjacency matrix A updated and said table $T_k$ updated, a physical routing vector ($V_{RP}$), said physical routing vector being static between two reconfigurations of the network, and indicating, for each final recipient node of a message sent by said node $N_k$, the input and/or output port of said node $N_k$ to which is connected the neighboring node to which said message is to be transmitted.

2. The node according to claim 1, wherein said routing module includes a cleaning means (100) capable of cleaning the adjacency matrix A, after said computation means (90) has computed a physical routing vector ($V_{RP}$), said cleaning consisting in of resetting all of the rows and columns of the adjacency matrix A that correspond to the unreachable nodes according to said physical routing vector.

3. The node according to claim 1, wherein said routing module includes a sending means capable of generating, as a function of a piece of configuration information relative to a state change of a link of said network (10), a configuration message intended to be transmitted to said input and/or output port (51 to 54) to be propagated on said network.

4. The node according to any one of the claims 1 to 3, wherein said routing module includes a filtering module (82) capable of receiving a configuration message from said input and/or output port (51 to 54) and generating configuration information.

5. The node according to any one of the previous claims, wherein the computation means (90) of the routing module is of the sequential type and uses, as computation intermediary, all or part of a distance matrix (D).

6. The node according to any one of the claims 1 to 4, wherein the computation means (90) of the routing module is of the parallel type.

7. The node according to claim 5 and claim 6, wherein the computation means (90) is a combination of a sequential computation means and a parallel computation means.

8. The node according to any one of the claims 1 to 7, including a programmable logic circuit, which is programmed to make up said routing module.

9. The node according to any one of the claims 1 to 8, including at least one input and/or output port (51), called internal port, designed to be connected to an application module.

10. The node according to claim 9, including a selection means (66) for converting an input and/or output port into an internal port or an external port.

11. A mesh communication network (10) including a plurality of nodes ($N_i$) connected by a plurality of links ($L_{ij}$), **characterized in that** at least one node of said plurality of nodes is a node according to any one of claims 1 to 10.

12. The network according to claim 11, **characterized in that** the network is reconfigurable and the routing on said network is static between two recnfigurations.

13. A method for reconfiguring a static routing, intended to be implemented by the nodes ($N_i$) of a mesh communication network (10) that includes N nodes connected by links, each node of the network being identified on said network by a logic number and including at least one input and/or output port (51 - 54), called external port because it is connected to a node of the network, called neighboring node of said node, **characterized in that** it includes the steps consisting in:

- providing, for each node $N_k$ of the network, as configuration data for said network, an adjacency matrix A of said network, said adjacency matrix A being a matrix with size N x N, a non-diagonal element $A_{ij}$ of which is equal to 1 when a link exists between the nodes $N_i$ and $N_j$ and 0 otherwise, and a table $T_k$ indicating the logic numbers of the neighboring network nodes of said node $N_k$;
- updating the adjacency matrix A and the table $T_k$, at each node $N_k$ as a function of a piece of configuration information relative to a state change of a link of said network (10) received by the node under consideration in a configuration message,

- computing, at each updating of the adjacency matrix A, a physical routing vector ($V_{RP}$) from the adjacency matrix A updated and the table $T_k$ updated, said physical routing vector ($V_{RP}$) indicated, for each final recipient node of a message sent by said node $N_k$, the input and/or output port of said node $N_k$ to which is connected the neighboring node to which said message is to be transmitted.

14. The method according to claim 13, including a cleaning step consisting of cleaning, for each node of the network $N_k$, the adjacency matrix A, after the step for computing the routing vector.

15. The method according to claim 13 or claim 14, wherein the step of computing the routing vector uses, as a comuting intermediary, all or part of a distance matrix (D).

16. The method according to claim 15, including the following steps :

   - initializing a diagonal matrix Y0=Id, all of the diagonal terms of which are equal to 1;
   - upon each iteration indexed by integer k between 1 and N-1, calculating : $Y_k=(A+Id)^k Y_0$, the term $D_{ij}$ of the matrix D being then equal to the hop k from which, when the term $(Y_{k-1})_{ij}$ is zero, the term $(Y_k)_{ij}$ becomes non-zero.

FIG.1

# FIG.2

FIG.3

FIG.4

20

**EP 2 800 319 B1**